# EUROPEAN PATENT SPECIFICATION

(11) **EP 1 561 674 B1**
(45) Date of publication and mention of the grant of the patent: **18.04.2007**
(21) Application number: 05100730.0
(22) Date of filing: 02.02.2005
(51) Int. Cl.: B62D 21/14

(54) **Adjustable-wheelbase vehicle chassis**
Verstellbarer Radstand eines Fahrzeugfahrgestell
Chassis pour un véhicule à empattement réglable

(30) Priority: 03.02.2004 IT TO20040052
(43) Date of publication of application: 10.08.2005
(73) Proprietor: ELASIS - Società Consortile per Azioni, 80038 Pomigliano d'Arco (IT)
(72) Inventor: Masciocco, Giuseppe c/o ELASIS- Soc.Consortile p. Azioni, 80038, Pomigliano d'Arco (IT); Firrincieli, Maurizio, 97100, Ragusa (IT)
(74) Representative: Jorio, Paolo

(56) References cited:
- DE-U1- 20 014 245
- FR-A- 1 513 216
- FR-A- 2 694 240
- US-A- 3 856 149

## Description

The present invention relates to an adjustable-wheelbase vehicle chassis.

Vehicles are known featuring wheelbase adjusting systems, e.g. bellows systems, for contracting the vehicle longitudinally to facilitate parking.

For example, FR2694240A discloses a vehicle having rear wheels which are joined by a "dead" axle. The vertical movement of the rear wheels is controlled trailing links and upper arms, which are hinged to bell cranks, which are controlled by spring units. The spring units are adjustable to maintain the ride height of the rear of the vehicle, and the links, fully extended in normal use, may be shortened to reduce the wheelbase of the vehicle for parking.

Another wheelbase adjusting system is disclosed by DE20014245U, which contains the features according to the preamble of claim 1.

A need is felt for a chassis which provides not only for reducing the wheelbase of the vehicle, but also for adjusting accommodation of the passenger compartment and permitting various vehicle configurations (e.g. pick-up, station-wagon, saloon, coupé) as required by the driver, while substantially preserving the external appearance of part of the body, and ensuring a high degree of structural rigidity when the vehicle is running, even in conditions other than parking, alongside variations in wheelbase and the selected configuration.

It is an object of the present invention to provide an adjustable-wheelbase vehicle chassis designed to meet the above requirement in a straightforward, low-cost manner.

According to the present invention, there is provided a chassis for an adjustable-wheelbase vehicle, as defined in claim 1.

The present invention also relates to an adjustable-wheelbase vehicle.

According to the present invention, there is provided an adjustable-wheelbase vehicle as defined in claim 7.

A non-limiting embodiment of the invention will be described by way of example with reference to the accompanying drawings, in which:
Figure 1 shows a diagram of a preferred embodiment of the adjustable-wheelbase vehicle chassis according to the present invention;
Figures 2 and 3 show schematic side views of the Figure 1 chassis showing the relative vehicle in two different operating conditions;
Figures 4 to 6 show side views of respective configurations of the Figure 2 vehicle.

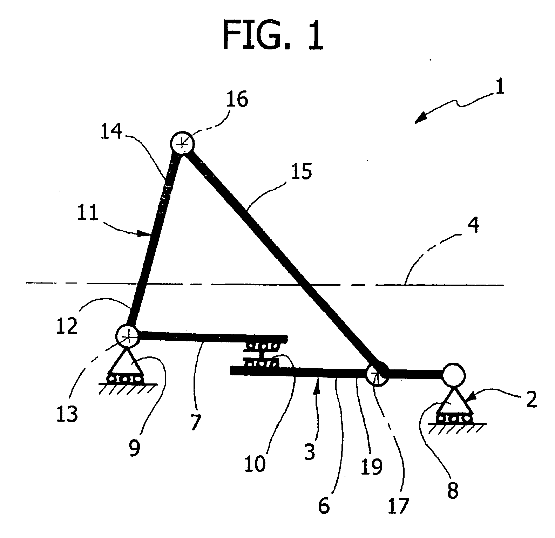

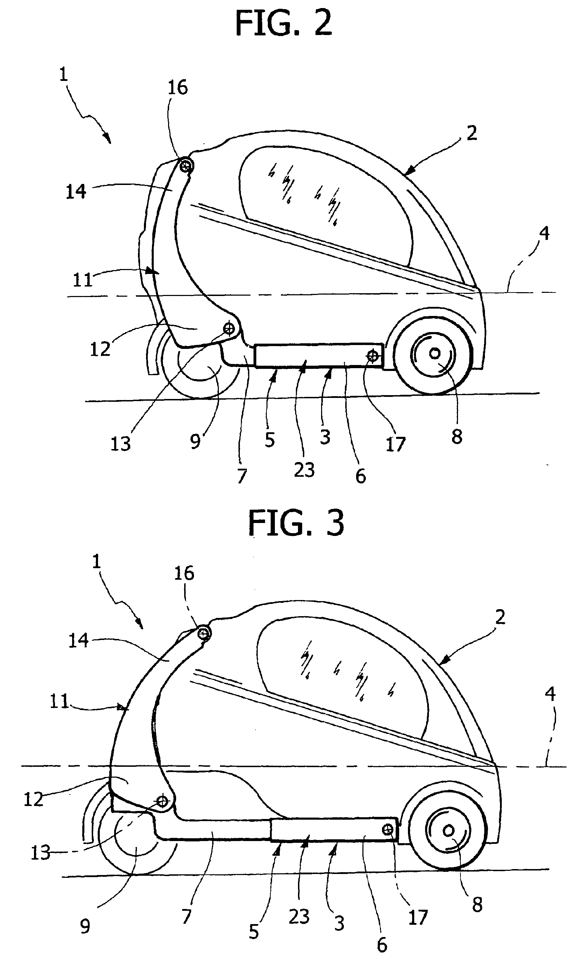

Number 1 in Figure 1 indicates a chassis (shown schematically) of an adjustable-wheelbase vehicle 2. Chassis 1 is defined at least partly by hydroformed elements, and comprises a base structure 3 extending parallel to the longitudinal axis 4 of vehicle 2 and comprising two telescopic side members 5 (only one shown in Figures 2 and 3) comprising respective front portions 6 associated with a front axle 8, and respective rear portions 7 associated with a rear axle 9 of vehicle 2 (Figure 2).

Portions 6 and 7 are connected slidably to each other by means of a bearing guide device 10 (shown schematically in Figure 1) to adjust the distance between axles 8 and 9 under the control of a powered actuating device (not shown), e.g. electric actuators (not shown).

Instead of or in combination with side members 5, base structure 3 comprises a floor panel (not shown) defining the passenger compartment and comprising two portions connected to each other in sliding and fluidtight manner.

Chassis 1 also comprises two rear posts 11, which have a substantially half-moon-shaped lateral profile, with the concavity facing frontwards, and comprise respective bottom ends 12 hinged to portions 7 about a horizontal first hinge axis 13 perpendicular to axis 4 and extending in front of axle 9 (Figure 2). Posts 11 taper from ends 12 towards their top ends 14, which are connected to portions 6 by a front structure 15 (shown schematically in Figure 1) hinged to ends 14 and to portions 6 about a second hinge axis 16 and a third hinge axis 17, respectively, both parallel to axis 13. Axis 16 extends through ends 14, while axis 17 extends through the front ends 19 of portions 6, behind axle 8, which is fitted to structure 15 (Figure 1).

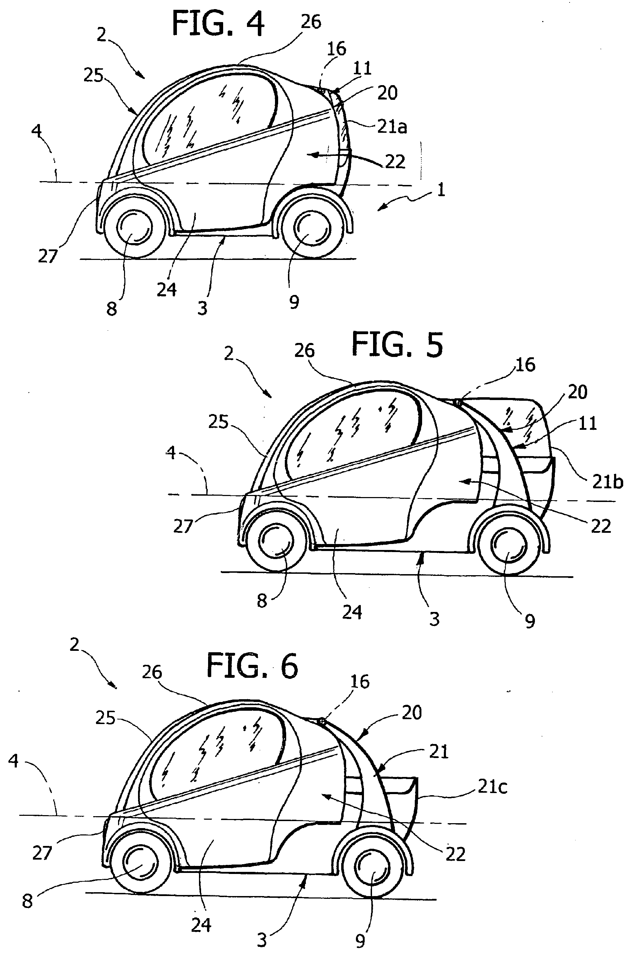

Posts 11 are spaced apart and define a housing 20 for interchangeable rear portions shown schematically and indicated 21a, 21b, 21c in the Figure 4-6 versions, and fittable by the user in fluidtight manner to the rest of vehicle 2, in a manner not described in detail, to form various configurations of vehicle 2, such as a two-seater car, four-seater saloon, or pick-up, respectively, as required.

With reference to Figures 4 to 6, structure 15 supports two outer side panels 22, which rest in fluidtight manner against respective lateral surfaces 23 defining the outer sides of side members 5 (Figures 2 and 3), and comprise respective doors 24, which, when closed, also rest in fluidtight manner against surfaces 23. Structure 15 also supports a windscreen 25, a passenger compartment roof 26, and a front end 27 of vehicle 2.

In actual use, when vehicle 2 is stationary, the user can adjust the distance between axles 8 and 9 by sliding portions 6, 7 with respect to each other along axis 4 and/or by rotating posts 11 to achieve a short-wheelbase operating condition (Figure 2) or a long-wheelbase operating condition (Figure 3), as required.

Adjusting the wheelbase changes not only the length of vehicle 2, e.g. by about 500 millimetres, but also the distance between ends 14 (or roof 26) and the floor of the passenger compartment (not shown), thus greatly increasing the versatility of the passenger compartment of vehicle 2.

Given the above versatility, the user can configure various versions of vehicle 2, as required, such as those shown in Figures 4 to 6, while substantially preserving the external appearance of the front part of the body, and ensuring a high degree of structural rigidity when the vehicle is running, even in conditions other than parking. That is, as shown in Figure 1, being a closed type comprising hinged structural elements, chassis 1, as compared with solutions simply comprising a bellows coupling, has a relatively high degree of rigidity in any operating condition by combining telescopically connected side members 5 and rotary posts 11.

Chassis 1 is also relatively straightforward, and can be fitted releasably to the rest of vehicle 2, e.g. by means of screws or bolts, to permit removal of posts 11 and/or side members 5 for maintenance purposes.

Clearly, changes may be made to chassis 1 and vehicle 2 as described herein without, however, departing from the scope of the present invention.

In particular, the two posts 11 may be replaced by a single rear structure having a rear window and no housing 20; and/or axis 17 may extend at a distance from side members 5.

Structure 15 may be replaced by a connecting structure defined by a number of connected parts, and still defining a second and at least a third hinge axis between posts 11 and portions 6.

Finally, posts 11 may be shaped otherwise than as shown, and/or axle 9 may be carried by posts 11 as opposed to portions 7, and axle 8 may be carried by portions 6 as opposed to structure 15.

## Claims

1. A chassis (1) for an adjustable-wheelbase vehicle (2), comprising:
- a base structure (3) extending parallel to the longitudinal axis (4) of the vehicle (2), and comprising a front portion (6) and a rear portion (7) slidable with respect to each other along said longitudinal axis (4) to adjust the distance between a front axle (8) and a rear axle (9) of said vehicle (2);
- at least one rear post (11) comprising a bottom end (12) hinged to said rear portion (7) about a horizontal first hinge axis (13) perpendicular to said longitudinal axis (4); and
- a connecting structure (15) hinged to said post (11) and to said front portion (6) about a second (16) and third (17) hinge axis, parallel to said first hinge axis (13), respectively; said connecting structure (15) supporting a passenger compartment roof (26); said second (16) hinge axis extending through the top end (14) of said post (11);
**characterised in that** said second axis (16) is located at the rear end of said roof (26).

2. - A chassis as claimed in Claim 1, **characterized in that** said third (17) hinge axis extends through said front portion (6).

3. - A chassis as claimed in claim 1 or 2, **characterized in that** said base structure (3) comprises two telescopic side members (5).

4. - A chassis as claimed in Claim 3, **characterized by** comprising two said posts (11) spaced transversely apart and defining a housing (20) for interchangeable rear portions fittable by a user in fluidtight manner to the rest of the vehicle (2).

5. - A chassis as claimed in any one of the foregoing Claims, **characterized by** being defined at least partly by hydroformed elements.

6. - A chassis as claimed in anyone of the preceding claims, **characterised in that** said base structure (3) comprises a floor panel defining the passenger compartment and comprising two portions connected to each other in sliding and fluidtight manner.

7. - An adjustable-wheelbase vehicle (2) comprising:
- a front axle (8);
- a rear axle (9); and
- a chassis (1) as claimed in anyone of the preceding claims.

8. - A vehicle as claimed in Claim 7, **characterized in that** said base structure (3) comprises two telescopic side members (5), and **characterised by** comprising:
- two said posts (11) spaced transversely apart and defining a housing (20);
- an interchangeable rear portion (21a; 21b; 21c) interposed between said posts (11) and fitted in fluidtight manner to the rest of the vehicle (2).

9. - A vehicle as claimed in claim 7 or 8, **characterized in that** said base structure (3) comprises two telescopic side members (5), and **characterised by** comprising two outer side panels.(22) carried by said connecting structure (15); said telescopic side members (5) defining respective lateral surfaces (23) supporting said side panels (22).

10. - A vehicle as claimed in Claim 9, **characterized in that** said side panels (22) comprise respective doors (24) resting, when closed, against said lateral surfaces (23) of said side members (5).

11. - A vehicle as claimed in Claim 9 or 10, **characterized by** comprising a windscreen (25) carried by said connecting structure (15).

## Patentansprüche

1. Fahrgestell (1) für ein Fahrzeug (2) mit verstellbarem Radstand, das umfasst:
eine Grundstruktur (3), die sich parallel zu der Längsachse (4) des Fahrzeugs (2) erstreckt und einen vorderen Abschnitt (6) sowie einen hinteren Abschnitt (7) umfasst, die in Bezug zueinander entlang der Längsachse (4) verschoben werden können, um den Abstand zwischen einer Vorderachse (8) und einer Hinterachse (9) des Fahrzeugs (2) zu verstellen;
wenigstes eine hintere Stütze (11), die ein unteres Ende (12) umfasst, das um eine horizontale erste Drehachse (13) senkrecht zu der Längsachse (4) drehbar an dem hinteren Abschnitt (7) angebracht ist; und
eine Verbindungsstruktur (15), die um eine zweite (16) und eine dritte (17) Drehachse parallel zu der ersten Drehachse (16) drehbar an der Stütze (11) bzw. dem vorderen Abschnitt (6) angebracht ist, wobei die Verbindungsstruktur (15) ein Fahrgastzellen-Dach (26) trägt und die zweite Drehachse (16) durch das obere Ende (14) der Stütze (11) hindurch verläuft;
**dadurch gekennzeichnet, dass** sich die zweite Achse (16) am hinteren Ende des Dachs (26) befindet.

2. Fahrgestell nach Anspruch 1, **dadurch gekennzeichnet, dass** die dritte Drehachse (17) durch den vorderen Abschnitt (6) hindurch verläuft.

3. Fahrgestell nach Anspruch 1 oder 2, **dadurch gekennzeichnet, dass** die Grundstruktur (3) zwei Teleskop-Seitenelemente (5) umfasst.

4. Fahrgestell nach Anspruch 3, **dadurch gekennzeichnet, dass** es zwei der Stützen (11) umfasst, die quer voneinander beabstandet sind und ein Gehäuse (20) für auswechselbare hintere Abschnitte bilden, die von einem Benutzer fluiddicht am Rest des Fahrzeugs (2) angebracht werden können.

5. Fahrgestell nach einem der vorangehenden Ansprüche, **dadurch gekennzeichnet, dass** es wenigstens teilweise durch hydrogeformte Elemente gebildet wird.

6. Fahrgestell nach einem der vorangehenden Ansprüche, **dadurch gekennzeichnet, dass** die Grundstruktur (3) eine Bodenplatte umfasst, die die Fahrgastzelle bildet und zwei Abschnitte umfasst, die gleitend und fluiddicht miteinander verbunden sind.

7. Fahrzeug (2) mit verstellbarem Radstand, das umfasst:
eine Vorderachse (8);
eine Hinterachse (9); und
ein Fahrgestell (1) nach einem der vorangehenden Ansprüche.

8. Fahrzeug nach Anspruch 7, **dadurch gekennzeichnet, dass** die Grundstruktur (3) zwei Teleskop-Seitenelemente (5) umfasst, und **dadurch gekennzeichnet, dass** es umfasst:
zwei der Stützen (11), die quer voneinander beabstandet sind und ein Gehäuse (20) bilden;
einen austauschbaren hinteren Abschnitt (21a, 21b, 21c), der zwischen die Stützen (11) eingesetzt und fluiddicht am Rest des Fahrzeugs (2) angebracht ist.

9. Fahrzeug nach Anspruch 7 oder 8, **dadurch gekennzeichnet, dass** die Grundstruktur (3) zwei Teleskop-Seitenelemente (5) umfasst, und **dadurch gekennzeichnet, dass** es zwei äußere Seitenplatten (22) umfasst, die von der Verbindungsstruktur (15) getragen werden, wobei die Teleskop-Seitenelemente (5) jeweilige seitlichen Flächen (23) bilden, die die Seitenplatten (22) tragen.

10. Fahrzeug nach Anspruch 9, **dadurch gekennzeichnet, dass** die Seitenplatten (22) jeweilige Türen (24) umfassen, die, wenn sie geschlossen sind, an den seitlichen Flächen (23) der Seitenelemente (5) anliegen.

11. Fahrzeug nach Anspruch 9 oder 10, **dadurch gekennzeichnet, dass** es eine Windschutzscheibe (25) umfasst, die von der Verbindungsstruktur (15) getragen wird.

## Revendications

1. Châssis (1) pour un véhicule à empattement réglable (2), comprenant :
- une structure de base (3) s'étendant de manière parallèle à l'axe longitudinal (4) du véhicule (2), et comprenant une partie avant (6) et une partie arrière (7) pouvant coulisser l'une par rapport l'autre le long dudit axe longitudinal (4) pour régler la distance entre un essieu avant (8) et un essieu arrière (9) dudit véhicule (2) ;
- au moins un montant arrière (11) comprenant une extrémité inférieure (12) articulée sur ladite partie arrière (7) autour d'un premier axe charnière horizontal (13) perpendiculaire par rapport audit axe longitudinal (4) ; et
- une structure de connexion (15) articulée sur ledit montant (11) et sur ladite partie avant (6) autour d'un deuxième (16) et d'un troisième (17) axe charnière, de manière parallèle audit premier axe charnière (13), respectivement ; ladite structure de connexion (15) soutenant un toit de compartiment passager (26) ; ledit deuxième (16) axe charnière s'étendant par l'extrémité supérieure (14) dudit montant (11) ;
**caractérisé en ce que** ledit deuxième axe (16) est situé à l'extrémité arrière dudit toit (26).

2. Châssis selon la revendication 1, **caractérisé en ce que** ledit troisième (17) axe charnière s'étend à travers ladite partie avant (6).

3. Châssis selon la revendication 1 ou 2, **caractérisé en ce que** ladite structure de base (3) comprend deux éléments latéraux télescopiques (5).

4. Châssis selon la revendication 3, **caractérisé en ce qu'**il comprend deux montants (11) espacés l'un de l'autre de manière transversale et définissant un logement (20) pour des parties arrières interchangeables ajustables par un utilisateur, de manière étanche par rapport au reste du véhicule (2).

5. Châssis selon l'une quelconque des revendications précédentes, **caractérisé en ce qu'**il est défini au moins partiellement par des éléments hydroformés.

6. Châssis selon l'une quelconque des revendications précédentes, **caractérisé en ce que** ladite structure de base (3) comprend un panneau de plancher définissant le compartiment passager et comprenant deux parties reliées l'une à l'autre de manière coulissante et étanche.

7. Châssis pour véhicule à empattement réglable (2) comprenant :
- un essieu avant (8) ;
- un essieu arrière (9) ; et
- un châssis (1) selon l'une quelconque des revendications précédentes.

8. Véhicule selon la revendication 7, **caractérisé en ce que** ladite structure de base (3) comprend deux éléments latéraux télescopiques (5), et **caractérisé en ce qu'**il comprend :
- deux montants (11) espacés l'un de l'autre de manière transversale et définissant un logement (20) ;
- une partie arrière interchangeable (21a ; 21b ; 21c) interposée entre lesdits montants (11) et ajustée de manière étanche par rapport au reste du véhicule (2).

9. Véhicule selon la revendication 7 ou 8, **caractérisé en ce que** ladite structure de base (3) comprend deux éléments latéraux télescopiques (5), et **caractérisé en ce qu'**il comprend deux panneaux latéraux externes (22) portés par ladite structure de connexion (15) ; lesdits éléments latéraux télescopiques (5) définissant des surfaces latérales respectives (23) soutenant lesdits panneaux latéraux (22).

10. Véhicule selon la revendication 9, **caractérisé en ce que** lesdits panneaux latéraux (22) comprennent des portes respectives (24) reposant, lorsqu'elles sont fermées, contre lesdites surfaces latérales (23) desdits éléments latéraux (5).

11. véhicule selon la revendication 9 ou 10, **caractérisé en ce qu'**il comprend un pare-brise (25) porté par ladite structure de connexion (15).
